# EUROPEAN PATENT SPECIFICATION

(11) **EP 3 470 213 B1**
(45) Date of publication and mention of the grant of the patent: **30.09.2020**
(21) Application number: 18199266.0
(22) Date of filing: 09.10.2018
(51) Int. Cl.: B29C 65/18, B29C 65/30, B29C 65/78

(54) **AUTOMATIC APPLICATOR DEVICE OF ANCHORAGE POINTS OF A POLYETHYLENE FILM**
AUTOMATISCHE APPLIKATORVORRICHTUNG FÜR VERANKERUNGSPUNKTE EINER FOLIE AUS POLYETHYLEN
DISPOSITIF APPLICATEUR AUTOMATIQUE DE POINTS D'ANCRAGE D'UN FILM EN POLYÉTHYLÈNE

(30) Priority: 10.10.2017 IT 201700113272
(43) Date of publication of application: 17.04.2019
(73) Proprietor: Ecepack S.r.l., 70032 Bitonto (BA) (IT)
(72) Inventor: ALTOBELLI, Alessandro, 71029 Troia (FG) (IT)
(74) Representative: Bruni, Giovanni

(56) References cited:
- FR-A5- 2 099 374
- JP-A- H04 185 424

## Description

### TECHNICAL FIELD

Object of the present invention is an automatic applicator device for providing one or more anchorage points on a polyethylene film, in particular for a liner.

### PRIOR ART

The liner is a kind of industrial packaging in polyethylene which lines the inner part of containers and is used for the transport of solid, dry bulk materials. It is provided starting from a polyethylene tube, suitably machined and closed with welded joints, as well as anchored to the container by means of anchorage points. In particular, said anchorage points are positioned on the liner on the basis of the different containers kinds and dimensions and allow to keep the liner in the most suitable position.

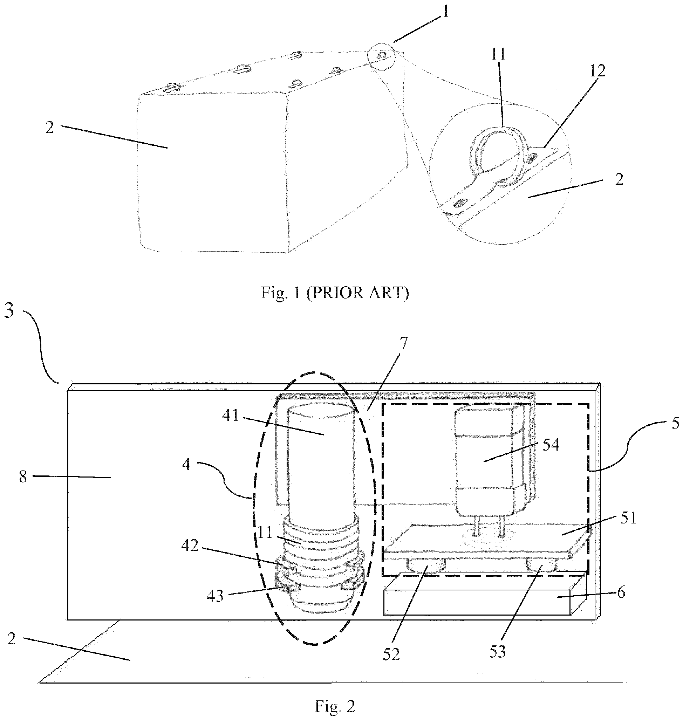

At the state of the art it is known that said anchorage points (1) usually consist of an elastic ring (11) connected to the liner (2) by applying adhesive tape or by welding a plastic stiffener, usually a LDPE polyethylene tab (12) so that the elastic ring (11) is trapped between the LDPE tab (12) and the polyethylene sheet of the liner (2), as it is shown schematically in fig. 1.

The solution used so far consists in the manual application of the elastic rings bound to the liner by means of adhesive tape or LDPE tab welded by manual pliers by an operator. Between the two solutions, the one with welded anchorage point is not only cheaper than the one with adhesive tape but it guarantees also higher seal levels. This depends mainly on the fact that welded anchorage point performance is not influenced by weather conditions (too hot or too cold) which often affect performance of bonding agents used on adhesive tapes. Therefore, the object of the present Patent application has been conceived to provide this kind of coupling.

Therefore, for providing a welded anchorage point on a liner according to the prior art, i.e. manually by one or more operators, it is needed to make a single polyethylene sheet slide inside the elastic ring (as for the adhesive tape). By keeping the polyethylene sheet and the elastic ring in the right position on the liner, the operator can proceed to weld the two polyethylene films with a manual welding machine provided with a couple of welding elements, while being careful to keep it in the right position during the time needed for welding (usually at least 10 seconds). A possible displacement of the operator during this operation could lead to a not homogeneous pressure on the surfaces to be welded, with the consequent risk of a wrong coupling between plastic stiffener and liner body. Naturally, in addition to the time factor, it is also important to consider the repetitiveness of the process for each anchorage point, there are in fact from 20 to 40 anchorage points on each linear.

Thus, it is clear enough that such realization of anchorage points for liner according to the prior art has many drawbacks linked to many factors. First of all, the realization of anchorage points according to the prior art does not guarantee the repetitiveness of the working steps because it depends mainly on the ability of the operator who carries out the operations manually. Moreover, in such case the precision of the anchorage points positioning can be expressed with tolerances in the order of ± 20 millimeters.

Moreover, form the safety point of view, the realization of the anchorage points according to the prior art can generate an unintentional risk for the operator to touch the welding parts which reach high temperatures and also to take, for a predetermined waiting time, not always ergonomic positions to keep the welding elements in the right position. Another risk for the operator is to fall over the connection cables during the operations, which are interposed between welding elements and the relative power supply box.

Finally, the disadvantages linked to productivity are not less important. In fact, for the production of a liner it is needed to complete a series of manual operations, which cannot be carried out by the operators until they have accomplished the realization of anchorage points with the just described manual welding machines.

Moreover, there are known at the state of the art the prior documents JPH04185424A and FR2099374. In the Japanese Patent JPH04185424A it is described a machine for high frequency continuous application of material by means of welding on a support shaped as sheet or film. Said machine comprises a frame, a welding electrode able to move horizontally to the desired welding point and comprising also supply means of the material to be welded on the support. A very similar machine but of another technical field is described also in the French Patent FR2099374 where it is described a method and a device for glueing flat textile structures, said device comprising glueing means for a plurality of textile elements to be applied on a suitable support.

### AIM OF THE INVENTION

Therefore, aim of the present invention is to solve the just described drawbacks by adopting a completely automatized new system for application of anchorage points of a liner, controlled by PLC and able to control all the fundamental variables of the positioning and welding process: contact pressure between plastic stiffener and film of liner body and heat yielded by welding elements to the welded joint.

Another aim of the invention is to allow the realization of anchorage points of a liner with a high grade of precision with tolerances in the order of ± 1 millimeter.

Another aim of the invention is to increase sensibly the safety level of the operator, above all because the operator has not to work near the hot welding elements any more and has not to bring with him the tool, the power box and the connection cables connecting them any more.

Another aim of the invention is to increase the productivity level of the production lines of the liner, because the operators, at the same time of the machine functioning, can start immediately other operations needed to complete the productive cycle, thus reducing the total cycle time, and guaranteeing at the same way a surely higher total quality level.

The object of the present invention reaches the aims of the invention since it an automatic applicator device of anchorage points to be welded on the surface of a polyethylene film, as claimed in the main claim 1.

### DESCRIPTION OF THE FIGURES

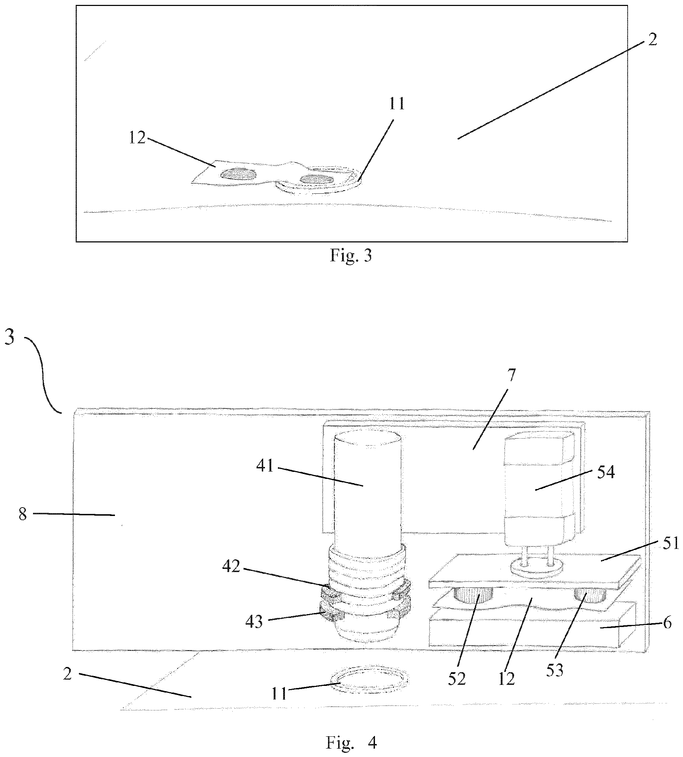

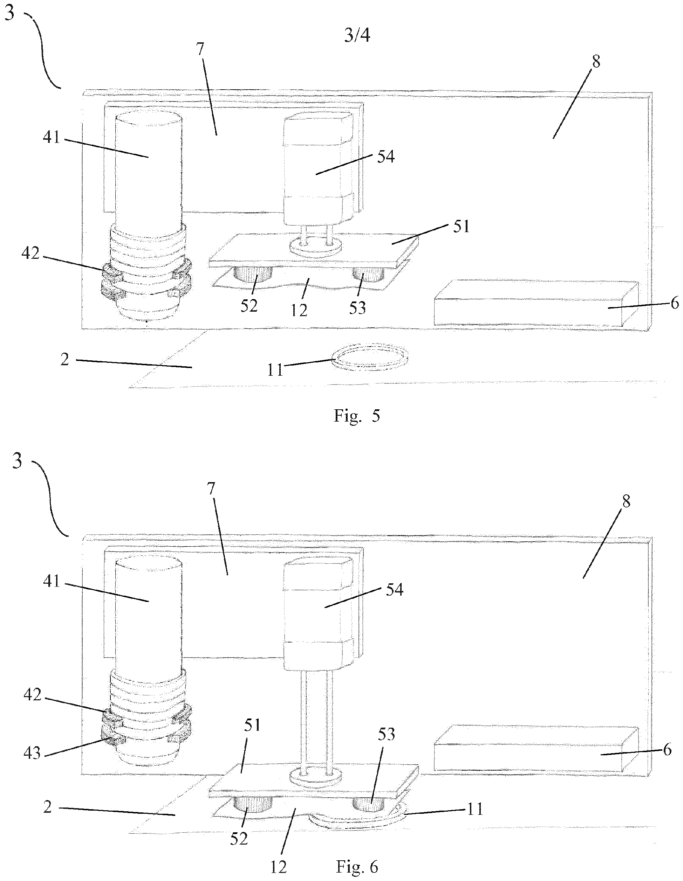

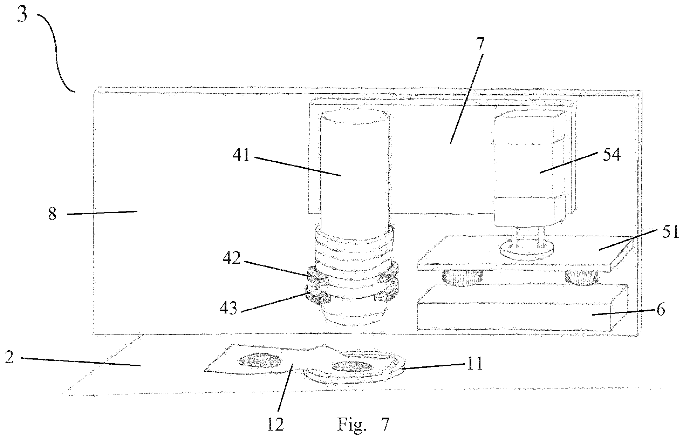

In figure 1 it is shown a schematic representation of an anchorage point of a liner; in figure 2 it is shown a panoramic view of the applicator machine of anchorage points for liner object of the present invention; in figure 3 it is shown an anchorage point provided automatically by the applicator machine on a film of the liner body; in figures 4 to 7 there are shown schematic representations of the functioning cycle of the applicator machine starting from the initial positioning of the elastic ring (fig. 4), the positioning of the welding plate (fig. 5), the realization of the welding (fig. 6), the repositioning of the welding plate in rest position (fig. 7).

### DETILED DESCRIPTION

With reference to the above cited figures, it will be described in detail an absolutely not limiting preferred example embodiment of the object of the present invention.

As yet previously said, object of the present invention is a totally automatic applicator device (3) of stiffeners for realizing one or more anchorage points (1) on a polyethylene film (2), preferably arranged horizontally under the same. Preferably the polyethylene film arranged horizontally under the device can be made up of a wall of a liner, while the stiffeners are made up of anchorage points (1), as previously described and represented schematically in figure 1, i.e. constituted by coupling at least an elastic ring (11) and a plastic stiffener in polyethylene (12) welded on the wall of the liner (2).

More in detail and with reference to figure 2, it is possible to deduce that the stiffeners automatic applicator device is nothing but a machine (3) able to move along a plane parallel to the polyethylene film (2) arranged under the same by means of a Cartesian positioner made up of three main elements: a singularizer (4) or distributor of elastic rings, a welding machine (5) and a little storage (6) of plastic stiffeners, i.e. a plurality of tabs in polyethylene (12) to be welded between the elastic ring (11) and the liner (2). The first two elements, i.e. the singularizer (4) and the welding machine (5) are fixed on a support plate (7), which can translate horizontally to a frame (8), by means of a pneumatic cylinder and a plurality of linear guides, both not graphically shown for easiness. The storage (6) is instead anchored and integral to the frame (8) and so, it is not interested by the horizontal translation of the support plate (7).

The automatic functioning and management of the machine (3) and its elements as described in the following is provided by a PLC, arranged inside a control electrical panel, whose main functions can be set by an operator panel. For easiness of representation, also the PLC automatic control is not graphically shown.

Yet with reference to figure 2, the welding machine (5) is made up of a plate (51), on which there are anchored two always hot welding elements (52 and 53), and of a series of little suction cups arranged just under the plane. Both the welding elements (52, 53) are provided with an electric heating resistance and with a temperature probe to keep the welding element at the temperature set by the operator panel, while the suction cups are fed by a vacuum pump arranged on the frame (8). Such welding assembly (5) is coupled to a pneumatic cylinder (54) able to translate vertically and anchored to the support plate (7).

The singularizer (4) is made up in turn of two elements: a ring storage made up of a vertical tube (41), on which there are stacked elastic rings (11) and a double pliers singularization system. Each pair of pliers is made up of two semicircular grip jaws (42 and 43) which, by alternatively widening, allow both to withdraw and preload a single elastic ring among those stacked on the vertical tube (41), and that the single elastic ring (11) goes down for gravity to the point of interest on the polyethylene film (2). The two actions are provided by the opening of the higher first couple of jaws (42) allowing the preload of a single elastic ring (11) between the two couples of jaws (42, 43) and by the following opening of the lower second couple of jaws (43) for releasing the single elastic ring (11) on the polyethylene film (2).

The new feature of the geometry of the applicator (3) consists in making the distance between the centre distance of the vertical ring holder tube (41) and the centre distance of the welding element (53) more distant from the singularizer (4) coincide with the exact measure of the horizontal translation of the applicator device (3). In this way the welding elements (52, 53) are able to weld the stiffener (12) to the underlying polyethylene film (2) without interfering with the elastic ring (1) previously stored by the singularizer (4) because the welding element (53) has a smaller diameter than the one of the elastic ring (11). The result of the just described process is that by a simple and short automatic sequence of movements of the machine (3) it is possible to obtain a double welding operation at the same time, in which the elastic ring (11) results to be caged between the polyethylene film of the liner (2) and the plastic stiffener (12), as it is shown schematically in figure 3.

As yet previously said, the machine and all its components are controlled by a PLC automatic control system, which allows to control all the fundamental variables of the positioning and welding process: contact pressure between plastic stiffener (12) and polyethylene film (2) of the liner body, as well as the heat yielded by the welding elements (52, 53) to the welded joint. The pressure is modulated by an electro-pneumatic pressure regulator, which can be set by operator panel. The quantity of heat yielded is instead determined on the basis of the welding elements temperature and the time these ones remain in contact with the welded joint. Both these factors, as the previous one, can be set by operator panel and managed by the PLC. An indubitable advantage of such solution is that by mounting the automatic applicator, object of the present invention, on a Cartesian system it is possible to provide anchorages with a high grade of precision (± 1 millimeter).

A possible functioning cycle realizable by means of the just described applicator device (3) can be summed up as follows, and is schematized in the figure 4 to 7. At the beginning of the cycle the applicator (3) reaches the exact point in which the anchorage point (1) has to be applied on the polyethylene film of the liner by means of the Cartesian positioner, and the machine (3) is in rest position as in figure 2. The singularizer (4) provides the preload of an elastic ring (11) inside the two couples of grip jaws (42, 43) by opening the higher jaws couple (42). In the following, with reference to figure 4, the singularize (4) makes an elastic ring (11) fall by opening the lower grip jaws couple (43). At the same time, the welding assembly (5) withdraws from the storage (6) a single plastic stiffener (12), which results to be temporarily anchored to the welding elements (52 and 53) thanks to the action of a plurality of suction cups. In the following, with reference to figure 5, the support plate (7) slides horizontally to the frame (8) and is brought in welding position, where the orthogonal projection of the welding element (53) is exactly correspondent to the inner area of the elastic ring (11) previously let fallen. In the following step, as shown in figure 6, the welding assembly (5) goes down vertically to provide the coupling between plastic stiffener (12) and underlying film (2). Finally, as shown in figure 7, the welding assembly (5) goes upwards again and at the same time the support plate (7) goes in rest position again. At this point, the Cartesian positioner moves the applicator (3) in a new position in which the next anchorage point (1) will be provided in another cycle.

## Claims

1. Automatic applicator device (3) of anchorage points (1) to be welded on the surface of a polyethylene film (2), comprising storage means (4) of almost circular shaped elastic elements (11), welding means (5) of plastic stiffener elements (12), further storage means (6) of said plastic stiffener elements (12), anchorage and actuation means (7, 8) for said storage and welding means, said device being such that
- said anchorage and actuation means comprise at least a support plate (7) able to translate horizontally to a basic frame (8), both in orthogonal position to said polyethylene film (2);
- said storage means (4) of the elastic elements (11) and said welding means (5) of the plastic stiffener elements (12) are anchored to said support plate (7) and are configured to move along a plane parallel to the polyethylene film (2).

2. Automatic applicator device (3) according to claim 1, **characterized in that** said welding means (5) comprise a second support plate (51) provided with at least a couple of welding elements (52, 53) with almost circular section and a pneumatic actuator (54) able to translate vertically and anchored to said first support plate (7).

3. Automatic applicator device (3) according to claim 2, **characterized in that** said welding element (53) more distant from the storage means (4) has a smaller diameter than the diameter of the elastic element (11).

4. Automatic applicator device (3) according to claim 2, **characterized in that** said welding elements (52, 53) comprise also an electric heating resistance, a temperature probe and a plurality of suction cups fed by a vacuum pump arranged on the frame (8).

5. Automatic applicator device (3) according to any one of claims 1 to 4, **characterized in that** said storage (6) of the plastic stiffeners (12) is in fixed position and integral to the frame (8).

6. Automatic applicator device (3) according to any one of claims 1 to 5, **characterized in that** said storage means (4) of the elastic elements (11) comprise a vertical tubular element (41) provided with a plurality of elastic rings (11) stacked outside and a pair of pliers with two grip jaws (42, 43).

7. Automatic applicator device (3) according to any one of claims 1 to 6, **characterized in that** the distance between the centre distance of said vertical tube (41) and the centre distance of the welding element (53) can be compared to the horizontal translation of the applicator device (3) .

8. Automatic applicator device (3) according to any one of claims 1 to 7, **characterized in that** all the components of said applicator (3) are controlled by a PLC automatic control system.

9. Method for application of a plurality of anchorage points (1) to be welded on the surface of a polyethylene film (2) by means of the automatic applicator device (3) according to the previous claims 1 to 8, comprising the following steps of:
- positioning the applicator (3) in the exact point in which the anchorage point (1) has to be provided on the polyethylene film (2) and preloading an elastic element (11) by opening the couple of the higher jaws couple (42);
- releasing an elastic element (11) on the surface of the polyethylene film (2) by opening the lower grip jaws couple (43) of said storage means (4) of the elastic elements (11);
- contemporary withdrawal of a single plastic stiffener (12) from the storage means (6) by means of the action of a plurality of suction cups applied to the welding elements (52, 53);
- horizontally sliding of the support plate (7) to the frame (8) towards a welding position, where the orthogonal projection of the welding element (53) is exactly corresponding to the inner area of the elastic element (11);
- support plate (51) going down by means of the pneumatic actuator (54) and providing welding between plastic stiffener (12) and underlying polyethylene film (2);
- support plate (51) going upwards again and contemporary displacement of the support plate (7) in rest position;
- moving the applicator (3) in a new position in which the next anchorage point (1) has to be provided.

## Patentansprüche

1. Automatische Auftragsvorrichtung (3) von Verankerungspunkten (1), die an die Oberfläche einer Polyethylenfolie (2) geschweißt werden sollen, umfassend Speichermittel (4) aus nahezu kreisförmig geformten elastischen Elementen (11), Schweißmittel (5) von Kunststoffversteifungselementen (12), weitere Speichermittel (6) der Kunststoffversteifungselemente (12), Verankerungs- und Betätigungsmittel (7, 8) für die Speicher- und Schweißmittel, wobei die Vorrichtung derart ausgebildet ist, dass
- die Verankerungs- und Betätigungsmittel umfassen mindestens eine Trägerplatte (7), die sich horizontal zu einem Grundrahmen (8) verschieben kann, beide in orthogonaler Position zu der Polyethylenfolie (2);
- die Speichermittel (4) der elastischen Elemente (11) und die Schweißmittel (5) der Kunststoffversteifungselemente (12) sind an der Trägerplatte (7) verankert und derart konfiguriert, dass sie sich entlang einer Ebene bewegen, die parallel zur Polyethylenfolie (2) ist.

2. Automatische Auftragsvorrichtung (3) nach Anspruch 1, **dadurch gekennzeichnet, dass** die Schweißmittel (5) eine zweite Trägerplatte (51) aufweisen, die mit mindestens einem Paar von Schweißelementen (52, 53) mit nahezu kreisförmigem Querschnitt und mit einem pneumatischer Aktuator (54) versehen sind, der sich vertikal verschieben kann und an der ersten Trägerplatte (7) verankert ist.

3. Automatische Auftragsvorrichtung (3) nach Anspruch 2, **dadurch gekennzeichnet, dass** die Schweißelemente (53), die weiter entfernt von der Speichermitteln (4) sind, einen kleineren Durchmesser als der Durchmesser des elastischen Rings (11) aufweisen.

4. Automatische Auftragsvorrichtung (3) nach Anspruch 2, **dadurch gekennzeichnet, dass** die Schweißmittel (52, 53) auch einen elektrischen Heizungswiderstand, eine Temperatursonde und eine Mehrzahl von Saugnäpfen umfassen, die durch eine auf dem Rahmen (8) angeordneten Vakuumpumpe gespeist werden.

5. Automatische Auftragsvorrichtung (3) nach einem der Ansprüche 1 bis 4, **dadurch gekennzeichnet, dass** die Lagerung (6) der Kunststoffversteifungen (12) in fester Position und in den Rahmen (8) integriert ist.

6. Automatische Auftragsvorrichtung (3) nach einem der Ansprüche 1 bis 5, **dadurch gekennzeichnet, dass** die Speichermittel (4) der elastischen Elemente (11) ein vertikales röhrenförmiges Element (41) umfassen, das mit mehreren elastischen außen gestapelten Ringen (11) versehen sind und ein Paar von Zangen mit zwei Greifbacken (42, 43) aufweisen.

7. Automatische Auftragsvorrichtung (3) nach einem der Ansprüche 1 bis 6, **dadurch gekennzeichnet, dass** der Abstand zwischen dem Zentrum der vertikalen Röhre (41) und dem Zentrum des Schweißelements (53) mit der horizontalen Verschiebung der Auftragsvorrichtung (3) verglichen werden können.

8. Automatische Auftragsvorrichtung (3) nach einem der Ansprüche 1 bis 7, **dadurch gekennzeichnet, dass** alle Komponenten der Auftragsvorrichtung (3) durch ein automatisches SPS-Steuersystem gesteuert werden.

9. Verfahren zum Auftragen von einer Vielzahl von Verankerungspunkten (1), die mit der automatischen Auftragsvorrichtung (3) gemäß den vorhergehenden Ansprüchen 1 bis 8 auf die Oberfläche eines Polyethylenfilms (2) geschweißt werden sollen, umfassend die folgenden Schritte von:
- Positionieren der Auftragsvorrichtung (3) in dem exakten Punkt, in dem der Verankerungspunkt (1) auf der Polyethylenfolie (2) bereitgestellt werden soll, und Vorbeladung von einen elastischen Element (11) durch Öffnen des Paares der höheren Backenpaar (42);
- Lösen eines elastischen Rings (11) auf der Oberfläche der Polyethylenfolie (2) durch Öffnen des unteren Griffbackenpaares (43) des Speichermittels (4) der elastischen Elemente (11);
- zeitgleiches Herausziehen einer einzelnen Kunststoffversteifung (12) aus dem Speichermittel (6) durch Einwirkung einer Vielzahl von Saugnäpfen, die auf die Schweißelemente (52, 53) aufgebracht sind;
- horizontales Gleiten der Trägerplatte (7) zum Rahmen (8) in Richtung einer Schweißposition, wo die orthogonale Projektion des Schweißelements (53) genau dem Innenbereich des elastischen Elements (11) entspricht;
- Heruntergehen der Trägerplatte (51) mittels des pneumatischen Aktuators (54) und Schweißen zwischen der Kunststoffversteifung (12) und der darunter liegenden Polyethylenfolie (2);
- Bewegen der Trägerplatte (51) wieder nach oben und zeitgemäße Verschiebung der Trägerplatte (7) in Ruheposition;
- Bewegen der Auftragsvorrichtung (3) in eine neue Position, in der der nächste Verankerungspunkt (1) vorgesehen werden muss.

## Revendications

1. Dispositif d'application automatique (3) de points d'ancrage (1) à souder sur la surface d'un film de polyéthylène (2), comprenant des moyens de stockage (4) d'éléments élastiques de forme quasi circulaire (11), des moyens de soudage (5) d'éléments raidisseurs en plastique (12), des moyens de stockage supplémentaires (6) desdits éléments raidisseurs en plastique (12), des moyens d'ancrage et d'actionnement (7 , 8) pour lesdits moyens de stockage et de soudage, ledit dispositif étant tel que
- lesdits moyens d'ancrage et d'actionnement comprennent au moins une plaque de support (7) apte à se translater horizontalement vers un cadre de base (8), tous deux en position orthogonale audit film de polyéthylène (2);
- lesdits moyens de stockage (4) des éléments élastiques (11) et lesdits moyens de soudage (5) des éléments raidisseurs en plastique (12) sont ancrés à ladite plaque de support (7) et sont configurés pour se déplacer le long d'un plan parallèle au film de polyéthylène (2).

2. Dispositif d'application automatique (3) selon la revendication 1, **caractérisé en ce que** lesdits moyens de soudage (5) comprennent une deuxième plaque de support (51) munie d'au moins un couple d'éléments de soudage (52, 53) à section presque circulaire et un actionneur pneumatique (54) apte à se translater verticalement et ancré à ladite première plaque de support (7).

3. Dispositif d'application automatique (3) selon la revendication 2, **caractérisé en ce que** ledit élément de soudage (53) plus éloigné des moyens de stockage (4) présente un plus petit diamètre que le diamètre de l'anneau élastique (11) .

4. Dispositif d'application automatique (3) selon la revendication 2, **caractérisé en ce que** lesdits éléments de soudage (52, 53) comprennent également une résistance électrique chauffante, une sonde de température et une pluralité de ventouses alimentées par une pompe à vide disposée sur le cadre (8).

5. Dispositif d'application automatique (3) selon l'une quelconque des revendications 1 à 4, **caractérisé en ce que** le stockage (6) des raidisseurs plastiques (12) est en position fixe et solidaire du cadre (8).

6. Dispositif d'application automatique (3) selon l'une quelconque des revendications 1 à 5, **caractérisé en ce que** lesdits moyens de stockage (4) des éléments élastiques (11) comprennent un élément tubulaire vertical (41) pourvu d'une pluralité d'anneaux élastiques (11) empilés à l'extérieur et une paire de pinces avec deux mâchoires de préhension (42, 43).

7. Dispositif d'application automatique (3) selon l'une quelconque des revendications 1 à 6, **caractérisé en ce que** la distance entre le centre dudit tube vertical (41) et le centre de l'élément de soudage (53) peut être comparée à la translation horizontale du dispositif d'application (3).

8. Dispositif d'application automatique (3) selon l'une quelconque des revendications 1 à 7, **caractérisé en ce que** tous les composants dudit applicateur (3) sont commandés par un système de contrôle automatique PLC.

9. Procédé d'application de plusieurs points d'ancrage (1) à souder sur la surface d'un film de polyéthylène (2) au moyen du dispositif d'application automatique (3) selon les revendications précédentes 1 à 8, comprenant les étapes suivantes de:
- positionnement de l'applicateur (3) dans le point exact dans lequel le point d' ancrage (1) doit être prévu sur le film de polyéthylène (2) et précharge d'un élément élastique (11) en ouvrant la paire des mâchoires supérieures (42);
- libération d'une bague élastique (11) sur la surface du film de polyéthylène (2) en ouvrant la paire inférieure de mâchoires de préhension (43) desdits moyens de stockage (4) des éléments élastiques (11);
- retrait contemporain d'un seul raidisseur en plastique (12) des moyens de stockage (6) au moyen de l'action d'une pluralité de ventouses appliquées sur les éléments de soudage (52, 53);
- glissement horizontal de la plaque de support (7) sur le cadre (8) vers une position de soudage, où la projection orthogonale de l'élément de soudage (53) correspond exactement à la zone intérieure de l'élément élastique (11);
- descente de la plaque de support (51) au moyen de l'actionneur pneumatique (54) et exécution d'un soudage entre le raidisseur en plastique (12) et le film de polyéthylène sous-jacent (2);
- remonte de la plaque de support (51) vers le haut et déplacement contemporain de la plaque de support (7) en position de repos;
- déplacement de l'applicateur (3) dans une nouvelle position dans laquelle le prochain point d'ancrage (1) doit être prévu.
